# FASCICULE DE BREVET EUROPEEN

(11) **EP 3 357 593 B1**
(45) Date de publication et mention de la délivrance du brevet: **24.05.2023**
(21) Numéro de dépôt: 18155403.1
(22) Date de dépôt: 06.02.2018
(51) Int. Cl.: B09B 3/00, B03B 9/06, C03C 1/02, C11D 3/386, C11D 11/00, C03C 1/00, C11D 3/38, B29B 17/02, B09B 5/00

(54) **BIOEPURATION D'EMBALLAGES MENAGERS USAGES**
BIOLOGISCHE REINIGUNG VON BENUTZTEN HAUSHALTSVERPACKUNGEN
BIO-PURIFICATION OF USED DOMESTIC PACKAGING

(30) Priorité: 07.02.2017 FR 1750996
(43) Date de publication de la demande: 08.08.2018
(73) Titulaire: VERALLIA PACKAGING, 92400 Courbevoie (FR)
(72) Inventeur: PETIT, Pierre-Olivier, 95880 Enghien-les-Bains (FR); BARET, Jean-Luc, 33850 Leognan (FR)
(74) Mandataire: Germain Maureau

(56) Documents cités:
- WO-A1-2014/198274
- US-A1- 2009 311 136
- Jeffrey Gotro: "Recycle and Disposal of Plastic Food Packaging Waste 5: A practical example of composting - Polymer Innovation Blog", , 30 janvier 2017 (2017-01-30), XP055482454, Extrait de l'Internet: URL:https://polymerinnovationblog.com/recy cle-disposal-plastic-food-packaging-waste- 5-practical-example-composting/ [extrait le 2018-06-08]

## Description

L'invention concerne un procédé de traitement des emballages ayant contenu des matières organiques biodégradables pour réduire la quantité de matière organique encore à leur contact, dans le cadre du recyclage desdits emballages. Les emballages concernés sont généralement en plastique ou en verre.

Le secteur de l'emballage regroupe les fabricants de bouteilles, flacons, bocaux et pots. Notamment, le taux de recyclage du verre d'emballage est très important. Le calcin, débris de verre de récupération d'emballages en verre, est devenu une matière première très importante de la fabrication du verre. Il est couramment ajouté aux autres matières premières des fabrications verrières (sable, soude, carbonate de soude, etc.) et favorise la vitrification. Le recyclage des emballages en verre nécessite la réduction voire l'élimination des contaminants organiques qu'ils contiennent encore après consommation. Pour la séparation des différents matériaux d'emballage, on dispose de diverses techniques allant de l'opération manuelle de tri à des opérations unitaires hautement spécialisées comme le tri optique ou la séparation des métaux ferreux par tri magnétique et celle des métaux non ferreux par courant de Foucault. Cependant, les contaminants organiques restent difficiles à éliminer. La réduction de la variation des teneurs résiduelles de ces contaminants et leur stabilisation permettrait de mieux maîtriser la qualité des calcins dans les fours verriers et donc de faciliter leur recyclage.

Les matières organiques des emballages ménager utilisés comprennent principalement d'une part les résidus d'habillage des contenants (étiquettes, film plastique périphérique de l'emballage également appelés manche, etc) majoritairement des papiers (cellulose principalement), et des plastiques (principalement polyéthylène téréphtalate), d'autre part les résidus des contenus (vins, bières, autres boissons et divers aliments ...) composés de glucides, de lipides, de protéines, d'éthanol ainsi que d'autres constituants.

A titre indicatif, on estime la proportion en contaminant organique des emballages sur la base de la matière sèche à 30 à 60% en poids de papier (cellulose principalement), 5 à 15 % en poids de plastiques et 30 à 50 % en poids de résidus d'aliments. Ainsi, la matière organique biodégradable d'un emballage pollué (le terme « pollué » est synonyme de « contaminé ») contient de la cellulose, généralement au moins 30 % en poids de cellulose sur la base de la matière sèche. Un lot d'emballages pollués, notamment de calcin pollué, apte à être traité selon l'invention comprend généralement au moins 0,05 % en poids de matière organique biodégradable, exprimé en matière sèche. Plus généralement, les emballages pollués, notamment de calcin pollué, comprennent plus de 0,05 % en poids de cellulose exprimé en matière sèche. Un séchage à 110 °C pour éliminer l'eau (et pour sécher la matière organique) puis une calcination à 550 °C à l'air (pour éliminer la matière organique sèche) constituent une méthode (dite de la « perte au feu » courante dans la profession verrière) apte à la détermination de la proportion de matière organique sèche sur l'emballage, dans le cas des emballages résistants à 550°C à l'air, notamment le verre. Dans le cas d'un emballage en plastique, on procède en deux temps : 1) lavage d'un lot d'emballages pour enlever la matière organique biodégradable et ainsi déterminer le ratio (matière organique biodégradable) /emballage, 2) séchage d'un autre lot à 110°C pour déterminer la proportion de matière organique sèche sur l'emballage.

Les matières organiques constituées des résidus d'aliments sont facilement biodégradables, alors que les papiers sont moins facilement biodégradables. Ces matières organiques biodégradables représentent la part la plus importante des contaminants organiques. Au même titre que les emballages eux-mêmes, les plastiques sont non biodégradables.

Les emballages contaminés ont par ailleurs une teneur en eau très variable ce qui constitue une difficulté supplémentaire à la maîtrise des processus de bio dégradation des matières organiques.

Les emballages contaminés contiennent une microflore très variable en quantité et biodiversité. Cette microflore endogène a un rôle déterminant dans le processus de bio dégradation. Cependant elle peut avoir un rôle défavorable en générant des nuisances comme des mauvaises odeurs.

Selon la présente invention, on s'est proposé de réduire la teneur en matière organique biodégradable des emballages de récupération en accélérant le processus de biodégradation, tout en limitant les impacts environnementaux. Le procédé selon l'invention peut être qualifié de procédé de «bioépuration» ou de «biostabilisation» des emballages recyclés. Le procédé selon l'invention réduit la masse de matière organique biodégradable polluant des emballages, en transformant au moins partiellement cette matière organique biodégradable en composés volatils comme en gaz carbonique ou en eau ou en alcool.

Le US20060122725 enseigne un procédé d'obtention de calcins de couleur uniforme, sans contaminants en formulant des calcins mélangés de différentes couleurs. Ce document enseigne que la contamination organique des calcins se trouve sous forme de résidus alimentaires polysaccharidiques, et sont sujets à une dégradation par action biologique au cours du processus de fermentation. En amassant les calcins en grands tas de stockage, les levures et les agents biologiques naturels présents dans les contaminants organiques du verre commencent un processus exothermique de fermentation qui convertit les polysaccharides en sucres simples et finalement à un alcool et du CO₂, qui se dispersent tous deux dans l'air. La chaleur générée élève la température de 15°C à 35 °C, ce qui accélère le processus de dégradation. Le vieillissement est efficace pour réduire la teneur en matière organique du calcin.

Le DE4431310 enseigne un procédé d'élimination d'impuretés organiques dans le traitement des déchets de verre. Ces déchets contaminés sont mélangés avec des enzymes ou une suspension de micro-organismes qui favorisent la décomposition des impuretés organiques. Les micro-organismes peuvent être une culture de bactéries. On pulvérise sur le verre un agent de compostage. Celui-ci est une suspension dans l'eau de cultures bactériennes appropriées. On fait passer un courant d'air au travers du verre ainsi traité qui peut être disposé dans un silo dans lequel l'air est insufflé à température et humidité contrôlées.

Le document WO2014/198274 enseigne le traitement de déchets municipaux par une préparation destinée à séparer la matière organique des déchets solides. Une suspension contenant la matière organique biodégradable est ainsi obtenue. Cette matière organique biodégradable se dégrade dans la suspension. De grandes quantités d'eau sont utilisées pour aboutir à la suspension puisque la teneur en matière différente de l'eau (« non-water content ») lors du traitement est comprise entre 10 et 50%, ce qui équivaut à une teneur en eau comprise entre 50% et 90%. Avec de telles quantités d'eau, un ruissellement hors des déchets solides intervient nécessairement. C'est grâce à cette grande quantité d'eau que la matière organique biodégradable est détachée de la matière solide pour former la suspension.

Le document US2009/0311136 enseigne une composition désinfectante et de nettoyage, notamment pour le nettoyage d'instruments médicaux. Cette composition comprend un détergeant basique et peut comprendre une bactérie comme Bacillus Subtilis ayant des propriétés anti-biotique. La dégradation de la masse biodégradable résulte essentiellement du fort caractère alcalin de la composition. Les bactéries citées sont viables dans la composition alcaline préconisée. Ce ne serait pas le cas pour un mycète ou actinomycète. La flore endogène n'est pas viable non plus dans un tel milieu, et c'est d'ailleurs le but recherché.

Un procédé de traitement d'emballages pollués est connu par le document XP055482454 (Jeffrey Gotro: "Recycle and Disposai of Plastic Food Packaging Waste 5: A practical example of composting - Polymer Innovation Blog").

L'invention concerne un procédé selon la revendication 1.

Les revendications dépendantes se réfèrent à des modes de réalisation préférés de l'invention.

En particulier, l'invention concerne un procédé de récupération d'emballages pollués par une matière organique biodégradable, selon la revendication 1, comprenant le traitement des emballages pollués par une préparation comprenant au moins une enzyme cellobiohydrolase et/ou une enzyme β 1-4 glucanase et en outre optionnellement une enzyme β 1-4 glucosidase. Le terme « traitement » signifie une mise en contact de la matière organique biodégradable avec la préparation comprenant l'enzyme. En pratique, on traite l'ensemble des emballages pollués (emballages + matière organique biodégradable) avec la préparation. Le procédé selon l'invention est un procédé de recyclage d'emballages pollués par une matière organique biodégradable contenant de la cellulose et contenant une flore endogène, comprenant le traitement des emballages pollués par une préparation comprenant au moins une enzyme d'hydrolyse de la cellulose, ladite préparation étant laissée agir sur les emballages pollués, ladite enzyme dégradant la cellulose en une masse de matière organique biodégradable, laquelle est ensuite dégradée par la flore endogène.

Compte tenu de ce que la teneur en cellulose des déchets ménager du type emballage représente au moins 30% en poids et généralement environ 50% en poids de leur masse biodégradable exprimée en matière sèche, que la cellulose est difficilement biodégradable par rapport à l'ensemble de la masse biodégradable contenue dans ces déchets, on a eu l'idée d'utiliser une enzyme attaquant efficacement la cellulose pour produire une matière organique facilement biodégradable en présence de la flore endogène contenue dans ces déchets et/ou de la flore exogène ajoutée à dessein aux déchets. La dégradation de la cellulose est donc réalisée en deux temps successifs : 1) dégradation par l'enzyme menant à une masse facilement biodégradable, puis 2) dégradation de la masse facilement biodégradable par des micro-organismes déjà présents dans les déchets (flore endogène) ou par des micro-organismes ajoutés (flore exogène). L'ajout aux déchets pollués d'une flore exogène accélère la dégradation de la matière organique biodégradable et non-cellulosique contenue au départ dans les déchets. La préparation selon l'invention favorise le développement de la flore endogène, et le cas échéant de la flore exogène qu'elle apporte. La flore endogène, ainsi que le cas échéant la flore exogène, se développe et agit pour dégrader la matière organique biodégradable des déchets.

Le procédé selon l'invention comprend le traitement des emballages pollués par au moins une enzyme d'hydrolyse de la cellulose (hydrolyse des liaisons β 1-4 osidiques de la cellulose). Cette enzyme, présente dans la préparation de traitement, est choisie parmi une cellobiohydrolase (on connait la cellobiohydrolase 1 et la cellobiohydrolase 2) ou une β 1-4 glucanase. De préférence, ces deux types d'enzyme sont simultanément présents. En effet, la cellobiohydrolase attaque préférentiellement les zones cristallines avec formation de cellobiose, alors que la β 1-4 glucanase attaque de préférence les zones amorphes de la cellulose avec libération d'oligomères solubles. Ces deux types d'enzyme ont donc une activité parfaitement complémentaire. Ces deux enzymes attaquent la cellulose de sorte qu'au moins la flore endogène présente sur les emballages pollués puisse poursuivre le travail de décomposition entamé par l'enzyme. De préférence encore, en plus de l'une ou l'autre des enzymes venant d'être mentionnée, la préparation contient une β 1-4 glucosidase car cette enzyme hydrolyse la cellobiose et les oligomères solubles pour aboutir au glucose. Cette dernière enzyme pousse donc encore plus loin la décomposition entamée par les deux premières enzymes.

Ainsi, la préparation selon l'invention comprend avantageusement les trois enzymes suivantes :
- cellobiohydrolase,
- β 1-4 glucanase,
- β 1-4 glucosidase.

Ces enzymes ont des activités complémentaires permettant au mélange les contenant toutes trois d'attaquer efficacement la cellulose jusqu'à la formation de glucose. Ce mélange permet donc d'attaquer efficacement le papier comprenant de la cellulose.

On caractérise la teneur en enzyme d'une préparation par son activité enzymatique. La préparation utilisée selon l'invention pour le traitement de l'emballage pollué contient une ou plusieurs enzymes, en quantité telle que 15 mL de préparation en présence de 50 mg de papier Whatman n°1, produit de préférence de 1 à 55,5 et de préférence de 3,5 à 40 mg de glucose par jour à la température de 45°C. Le papier Whatman n°1 est un papier constitué à 100% de cellulose. Il est universellement utilisé par l'homme du métier microbiologiste pour déterminer une activité enzymatique. Le dosage du glucose est réalisé par la méthode bien connue au DNS (acide 3,5-dinitrosalicylique).

De préférence la préparation comprend également au moins une enzyme d'hydrolyse d'hémicellulose. La présence de cette enzyme permet d'attaquer efficacement l'hémicellulose et donc le papier contenant celle-ci. Comme enzyme d'hydrolyse d'hémicellulose, on peut citer les
Xylanases et glucuronoxylanases,
Glucomannanases,
Galactoglucomannanases,
Arabinoglucuronoxylanases,
Galactanases,
Xylan Acetyl estérases.

Comme préparations commerciales comprenant des enzymes d'hydrolyse de cellulose et/ou d'hémicellulose on peut citer à titre d'exemple: Fibrezyme G4, CMAX de Dyadic, Celluclast, Novozyme 188 de Novozymes, Cellulases de Dupont Genencor.

Une fois la cellulose attaquée et transformée en glucose, la flore endogène toujours présente dans la matière biodégradable prend le relais pour poursuivre le processus de dégradation. Pour accélérer ce processus, on peut ajouter une flore exogène à la préparation. Ainsi, avantageusement, la préparation servant au traitement des emballages pollués comprend également un mycète ou actinomycète, un mycète étant préféré, ce qui recouvre les levures et les moisissures. Le mycète peut être une moisissure filamenteuse dotée de l'activité respiratoire ou une levure dotée d'une activité respiratoire et d'une activité fermentaire.

Comme mycète du type moisissure, on peut citer un Aspergillus, un Fusarium, un Neurospora, un Trichoderma, un Pénicillium. On peut notamment citer les moisissures à fortes activité cellulasique (Trichoderma reesei, Myceliophthora thermophila...) pour être avantageusement utilisées afin de faciliter la dégradation des résidus de papiers.

Comme mycète du type levure on utilise de préférence Saccharomyces Cerevisiae. On peut également citer les levures suivantes: Candida, Yarrowia, Kluyveromyces, Pichia, Géotrichum.

Comme actinomycète, on peut citer notamment Streptomyces, Cellulomonas, Microbispora, Thermobifida.

La préparation peut comprendre au moins une levure et/ou au moins une moisissure. La préparation peut comprendre plusieurs levures et/ou plusieurs moisissures.

La microflore de la préparation peut être issue d'une culture préalable des espèces sélectionnées et/ou de préparations commerciales sous forme humide ou solide (pressée, liquide, ou sèche).

Des formulations commerciales de micro-organismes adaptés peuvent être obtenues auprès de fournisseurs de levures comme Lesaffre ou Lallemand, et de préparations de micro-organismes comme Toler-X 5100, BioRemove 5600 de Novozymes, ou les koji de Bioc ou d'Higuchi.

La préparation utilisée dans le cadre de l'invention pour le traitement des déchets est réalisée très simplement dans une cuve dans laquelle on met de l'eau, les enzymes et le cas échéant, le mycète. Cette préparation contient de préférence 2.10⁷ à 2.10¹¹ ufc/L (ufc : unité formant colonie) de mycète ou actinomycète (somme des mycètes et actinomycètes). Cette préparation aqueuse a de préférence un pH inférieur à 8 et de préférence inférieur à 7 et de préférence compris entre 4 et 6,5, ce qui peut s'ajuster par un acide ou une base (par exemple l'acide chlorhydrique dilué ou la soude diluée). Ce pH neutre ou légèrement acide rend la préparation selon l'invention inerte vis-à-vis du calcin, ce qui ne serait la même chose si elle était fortement alcaline.

Cette préparation peut être réalisée à température ambiante, et de préférence à une température comprise dans le domaine allant de 10 à 35°C. Les différents ingrédients sont mélangés dans la cuve à l'aide d'un agitateur et/ou d'une pompe de recirculation extérieure.

La préparation est mise au contact des déchets à traiter en la déversant notamment par aspersion ou pulvérisation sur ces déchets. On peut aussi tremper les déchets dans la préparation. Les déchets peuvent être en tas sur le sol ou dans un container. Les déchets peuvent également être concassés ou broyés et mis à défiler sur un tapis en défilement pour recevoir la préparation selon l'invention. On verse de préférence cette préparation en une quantité telle qu'elle ne ruisselle pas hors de la masse de déchets, ce qui est fonction de la taille des déchets à traiter. La préparation est généralement ajoutée aux emballages pollués, notamment du calcin pollué, à raison de 0,5 à 7% et plus généralement de 0,5 à 5% en poids de la somme de la masse des emballages pollués et de la préparation. La préparation est laissée agir sur les déchets. Les déchets traités sont donc de préférence protégés des intempéries de façon à éviter leur rinçage par l'eau de pluie. Dans le cadre de l'invention, on utilise le moins possible d'eau, c'est-à-dire une quantité d'eau minimale permettant d'assurer l'activité enzymatique et microbienne. Avant le traitement par la préparation selon l'invention, les déchets, notamment le calcin, contiennent généralement un peu d'eau, cependant en quantité variable et généralement insuffisante. Cette eau est apportée par les résidus des contenus alimentaires. Elle est généralement en quantité insuffisante pour hydrater les résidus papiers dont la cellulose, lesquels se trouvent alors insuffisamment hydratés pour être hydrolysés. L'apport d'eau réalisé par le traitement des déchets avec la préparation selon l'invention ne provoque pas d'entrainement par dissolution ou mise en suspension de contaminants car cette eau reste absorbée dans les déchets, notamment le calcin. Dans le procédé selon l'invention, on ajoute par le biais de la préparation selon l'invention, la quantité de liquide strictement nécessaire à l'humidification de la matière organique en évitant tout excès d'eau et donc de ruissellement de cet excès. En effet, un tel liquide de ruissellement contiendrait nécessairement des contaminants organiques et constituerait donc un transfert de pollution qu'il conviendrait ensuite de gérer. Au lieu de cela, dans le cas du calcin, la réutilisation de ce calcin comme matière première de fusion dans un four verrier résout le problème des restes de contaminants et de flore microbienne sur le calcin puisque la fusion en verre est un moyen radical d'élimination de cette matière organique et de sa flore microbienne. Le fait que le calcin contienne peu d'eau est un avantage puisque l'eau doit être éliminé avant ou au début du processus de fusion, ce qui représente une perte d'énergie.

On peut également mettre la préparation selon l'invention sous la forme d'une mousse en introduisant dans cette préparation un agent moussant et/ou mouillant. Un tel agent moussant et/ou mouillant peut être choisi parmi les tensioactifs anioniques de synthèse comme les alkyl sulfates ou sulfonates, les alcools gras, les dérivés glycolés, ou des solutions de protéines ou des hydrolysats de protéines, ces derniers présentant l'avantage, outre l'effet tensioactif, de constituer une source d'azote assimilable par les microorganismes et favorisant donc leur développement. De la sorte, la préparation accroche sur les déchets sans couler, ce qui limite encore plus le risque de ruisselement hors des déchets.

L'action biochimique de la préparation sur la matière organique biodégradable est exothermique, ce qui, en chauffant un peu le milieu traité, est favorable à sa propre efficacité. On peut éventuellement faire passer de l'air au travers du lot à traiter (convection forcée) pour accélérer le processus. Cependant, dans le cas de la présence dans la préparation d'un mycète du type levure, le traitement peut n'être accompagné d'aucune convection forcée d'air au travers des emballages pollués tout en conservant une très bonne efficacité, ce qui représente un gros avantage de la présente invention.

Bien entendu, on ne sortirait pas de la portée de la présente demande en traitant un lot de déchets successivement par deux préparations, par exemple l'une comprenant les enzymes et l'autre comprenant un mycète. En procédant ainsi, on considère que l'on traite le lot par une préparation comprenant les enzymes et le mycète.

Une fois la préparation mise au contact des déchets pollués, on la laisse agir sur eux. La préparation n'est donc pas utilisée pour détacher de la matière organique biodégradable des emballages par une action mécanique comme le ferait un lavage. On laisse agir la préparation généralement au moins 1 jour (soit 24h) et de préférence au moins 2 jours. Généralement, il n'est pas nécessaire de la laisser agir plus de 1 an. On laisse agir la préparation généralement pendant une durée allant de 1 jour à un an et plus généralement comprise dans le domaine allant de 2 jours à 6 mois. Généralement, un lot d'emballages pollués, notamment de calcin pollué, et traité selon l'invention comprend après traitement encore au plus 0,05 % en poids de matière organique biodégradable, exprimé en matière sèche.

On a observé que le traitement des déchets selon l'invention produit une stabilisation de la qualité des déchets, ce qui signifie que les différents lots de déchets traités sont plus voisins les uns des autres sur le plan de leur composition après le traitement qu'avant le traitement. On estime qu'un lot de déchets comprenant une forte proportion de matière organique biodégradable perd une plus forte quantité de matière organique biodégradable par le traitement selon l'invention qu'un lot similaire mais moins chargé en matière organique biodégradable, et ce dans le même laps de temps. A la fin du traitement selon l'invention, les différents lots de déchets traités, notamment de calcin traité, comprennent donc tous une proportion voisine de matière organique biodégradable, que l'on estime comprise entre 0,005 et 0,05 % de leur poids (emballages + matière organique biodégradable).

Après traitement des emballages pollués, la matière organique au contact de l'emballage a grandement diminué en quantité. Cependant, la quantité d'enzyme et de mycète ou actinomycète au contact de l'emballage est importante. On peut envisager de récupérer au moins une partie de ces enzymes et mycète ou actinomycète pour constituer la préparation de départ pour le traitement selon l'invention des emballages pollués. Pour ce faire, on peut procéder au rinçage des emballages pollués et traités, par une eau d'appoint. Ce rinçage peut être réalisé par exemple en engageant l'emballage à rincer dans un tambour tournant et en alimentant en eau l'intérieur du tambour. On peut aussi placer l'emballage pollué et traité sur un tapis défilant et asperger de l'eau d'appoint sur l'emballage en défilement. Ce rinçage produit une eau de ruissellement contenant de l'enzyme et du mycète ou actinomycète. On peut alors utiliser cette eau de ruissellement au moins partiellement pour constituer la préparation de traitement de l'emballage pollué.

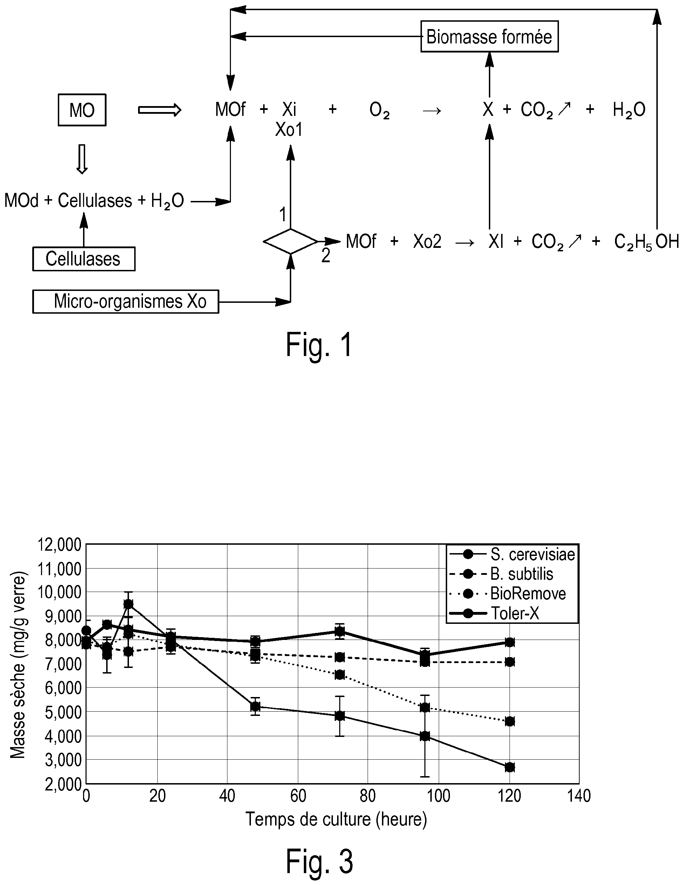

Les emballages traités dans le cadre de l'invention ont fait l'objet d'un tri sélectif préalablement à leur traitement. Ce tri sélectif aboutit à des lots de déchets contaminés qui ne contiennent chacun qu'un seul type d'emballage, par exemple uniquement des emballages en plastique ou uniquement des emballages en verre, le terme calcin, dans ce dernier cas, étant alors approprié. Notamment, le calcin polué trié et soumis au traitement selon l'invention contient généralement au moins 90% en poids de verre. Suite au traitement selon l'invention, il est inutile de procéder à un traitement supplémentaire et le calcin traité, même s'il contient encore de la matière organique biodégradable, peut être introduit directement dans un four verrier. La figure 1 représente un synopsis de fonctionnement de l'invention dans le cas de l'utilisation d'un micro-organisme à double métabolisme, à la fois aérobie et anaérobie, comme c'est le cas de Saccharomyces Cerevisiae. Une matière organique MO pollue des déchets ménagers. Cette matière organique MO comprend une matière organique facilement biodégradable MOf (aliments) et une matière organique difficilement biodégradable MOd (cellulose). L'enzyme ajoutée attaque la MOd en présence d'eau pour former une MOf. Le micro-organisme ajouté en quantité X₀ est un mycète ou actinomycète de type X₀₁ attaquant la MOf en fonctionnement aérobie (intervention de l'oxygène) ajoutant son action à la flore endogène en quantité Xᵢ, ou de type X₀₂ attaquant la MOf en fonctionnement fermentaire (c'est-à-dire anaérobie, c'est-à-dire, sans intervention de l'oxygène) Ces deux types de réactions mènent à la formation de CO₂ et à une biomasse devenant partie intégrante de la MOf. En fonctionnement aérobie, de l'eau est également formée. En fonctionnement anaérobie, de l'alcool (C₂H₅OH) est également formé. L'alcool s'évapore ou intègre la MOf. Ces métabolismes aérobie et anaérobie dégagent tous deux de la chaleur, ce qui est favorable à leur propre fonctionnement.

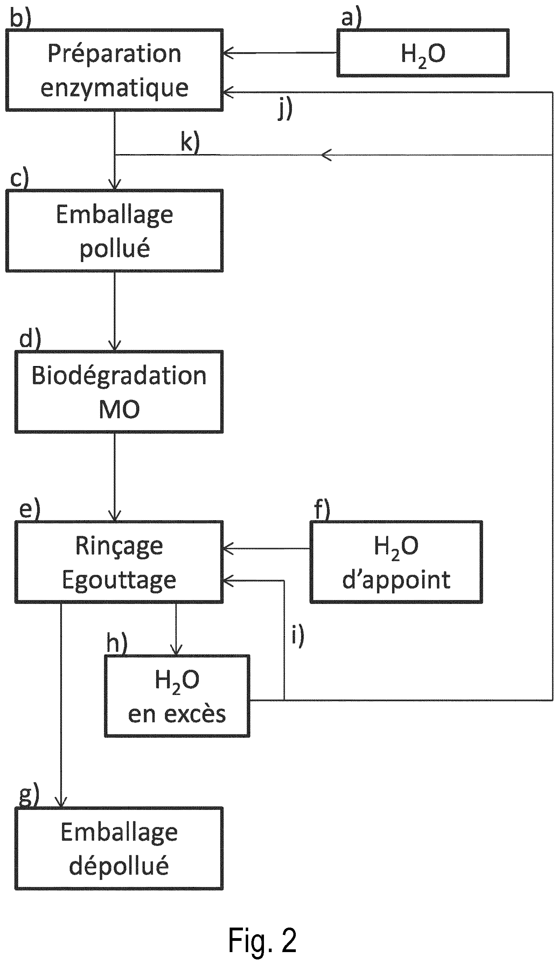

La figure 2 représente un synopsis de fonctionnement de l'invention dans le cadre d'un procédé fonctionnant partiellement en continu. Une préparation enzymatique b) est préparée à partir d'enzymes et éventuellement d'un mycète ou actinomycète et d'eau propre a). Cette préparation enzymatique est ensuite aspergée sur un lot d'emballage pollué en tas sur le sol (en c)) sans ruissellement au sol. On laisse agir cette préparation sur le tas d'emballage (en d)) plusieurs jours. On collecte ensuite le tas et on procède ensuite à son rinçage/égouttage e), par exemple dans un tambour tournant ou sur un tapis défilant, en l'aspergeant d'une eau d'appoint f) propre. Cette opération mène à un lot d'emballages relativement dépollués g) et à une eau de ruissellement en excès h) qui est récupérée. Cette eau contient des enzymes, éventuellement du mycète ou actinomycète et de la matière organique. Au cours du traitement, les enzymes ne sont pas consommées. Par contre, la matière organique de départ a beaucoup diminué en quantité en se transformant partiellement en eau, CO₂ ou alcool. Si un mycète ou actinomycète a été utilisé au départ, celui-ci est à ce stade en quantité plus importante, car il s'est multiplié au contact de la matière organique. Cette eau faiblement chargée en matière organique mais riche en enzyme et éventuellement en mycète ou actinomycète est avantageusement recyclée de l'une ou l'autre des façons suivantes :
- en étant réutilisée en i) au rinçage/égouttage e),
- en servant en j) à l'élaboration de la préparation enzymatique b),
- en étant directement aspergée en k) sur l'emballage pollué, en addition à une préparation enzymatique b).

Bien entendu, l'eau recyclée revenant sur des emballages pollués est de préférence additionnée en quantité telle que la limite de ruissellement du lot traité ne soit pas atteinte. Quelle que soit la façon avec laquelle le lot d'emballage reçoit la préparation pour son traitement (en une ou en plusieurs fois), il est recommandé de ne pas dépasser la limite de ruissellement, notamment un maximum de 5% en masse de préparation (le cas échéant : somme de la masse de toutes les préparations) par rapport à la somme de la masse d'emballage pollué + préparation(s). Ce recyclage de l'eau présente les avantages suivants :
- réduction de la quantité d'eau nécessaire,
- réduction de la quantité d'enzyme et de mycète ou actinomycète nécessaire,
- stabilisation du procédé car le recyclage d'une partie de la population microbienne issue du traitement favorise la sélection des microorganismes adaptés à ce traitement. En effet, les micro-organismes les mieux adaptés se reproduiront plus vite, ce qui est favorable à la bioépuration des déchets.

C'est l'opération de rinçage/égouttage qui peut être réalisée en continu. En effet l'emballage traité est introduit progressivement en continu dans un tambour tournant ou sur un tapis défilant, et l'eau d'appoint est aspergée en continu sur les emballages en défilement. L'eau en excès est récupérée en continu ainsi que le lot d'emballage dépollué.

### Exemples 1 à 4:

La dégradation des matières biodégradables sur du calcin était évaluée par la mesure directe de production de gaz carbonique, afin de déterminer la «respiration» des calcins. Pour ce faire, on a utilisé des colonnes de verre (diamètre : 4,8 cm, hauteur : 30 cm) contenant 600 g de calcin pollué par des étiquettes contenant de la cellulose et des restes d'aliments, ledit calcin ayant été prélevé au stade broyé, sur un site industriel de recyclage du calcin. On a élaboré les quatre préparations suivantes :
Ex 1 (témoin): eau stérile, sans enzyme ni microorganisme
Ex 2 : préparation contenant des enzymes
Ex 3 : préparation contenant des enzymes + une levure (S. Cerevisiae)
Ex 4 : préparation contenant des enzymes + une moisissure (BioRemove)

Chacune de ces préparations est placée dans une colonne de verre contenant le calcin pollué, à raison de 15 mL de préparation pour 600 g de calcin pollué. Celui-ci contient une flore endogène, présente pour tous les exemples, y compris le témoin.

Aucun apport gazeux n'a été réalisé et les colonnes étaient fermées, de sorte que les systèmes fonctionnaient avec l'oxygène initialement présent dans les colonnes. Le gaz dans la colonne était prélevé en continu en tête de colonne, introduit dans un analyseur de CO₂, puis recyclé dans la colonne. La mesure de la teneur en CO₂ s'effectue en enregistrant la valeur de la concentration en CO₂ en fonction du temps sur une durée d'environ 10 minutes. L'accroissement de la production de CO₂, et donc de l'intensification de la dégradation de la matière organique biodégradable polluant des calcins ainsi mis en évidence en système fermé, simule la dégradation de la matière organique biodégradable sur un emballage pollué en l'absence de convection forcée au travers de l'emballage.

On a tout d'abord préparé une solution d'enzymes cellulolytiques en dissolvant 300 mg de la préparation en poudre Dyadic Fibrezym G4 dans 100 mL d'eau. Selon le fournisseur, cette préparation a une activité cellulase au minimum de 150 000 Unité/g selon la méthode Dyadic DAP-1 (méthode du fournisseur). Ce produit commercial contient une cellobiohydrolase. On dissout dans cette même solution 150 mg de la préparation en poudre Dyadic Xylanase 2XP CONC ayant une activité xylanase au minimum de 90 000 Unité/g selon la méthode Dyadic DAP-38x (méthode du fournisseur). Ce second produit commercial contient une β 1-4 glucanase. On a ainsi obtenu une solution enzymatique mère à 4,5 g de produit enzymatique commercial par litre. Cette préparation a une activité enzymatique d'hydrolyse de la cellulose menant au glucose, confirmant la présence de β 1-4 glucosidase. Cette préparation associe au moins les activités enzymatiques cellobiohydrolase, β 1,4- glucanase, β 1,4- glucosidase, ainsi que des activités xylanases. Cette préparation est utilisée telle quelle pour l'exemple 2.

On a préparé une culture préalable 48h à 30°C de S. Cerevisiae sur gélose sabouraud. Les colonies de levure ont été reprises dans 5 ml d'eau stérile et l'on obtient une suspension. On ajoute ensuite à la préparation enzymatique mère déjà décrite les quantités nécessaires de cette suspension pour l'obtention de 4.10¹⁰ ufc de levure par litre de préparation. On a ainsi obtenu la préparation utilisée pour l'exemple 3. Mis sur le calcin, la quantité de levure était de 1.10⁶ ufc/g de calcin.

Dans la préparation enzymatique mère déjà décrite, on rajoute 0,1 g de poudre de Bioremove 5600 (fabriquant : Novozymes), laquelle contient 1.10⁷ ufc/g de produit commercial. On a ainsi obtenu la préparation utilisée pour l'exemple 4. Cette préparation contient 6,7.10⁷ ufc de moisissure par litre de préparation, soit 1,7.10³ ufc/g de calcin.

Tous ces essais étaient bien comparatifs dans la mesure où toutes les préparations utilisées (hors le témoin) contenaient la même quantité d'enzyme (67,5 mg de produit commercial/colonne), de sorte que 15 mL de préparation en présence de 50 mg de papier Whatman n°1, produit 35,38 mg de glucose par jour à la température de 45°C. Ces préparations étaient ajoutées au calcin pollué à raison de 2,4% du poids de (calcin pollué + préparation). Le calcin et les préparations ont été bien mélangés pour répartir aussi uniformément que possible la préparation à la surface du calcin, avant de l'introduire dans la colonne.

Les conditions résumées des exemples étaient donc les suivantes :

**Tableau 1**

| **Exemple n°** | **Levure S. cerevisiae (ufc/g calcin)** | **Moisissure BioRemove (ufc/g calcin)** | **Enzymes** |
|---|---|---|---|
| **1 (témoin)** | - | - | - |
| **2** | - | - | 67,5 mg/colonne |
| **3** | 1.10⁶ | - | 67,5 mg/colonne |
| **4** | - | 1,7.10³ | 67,5 mg/colonne |

Les résultats sont présentés dans le tableau n°2.

**Tableau 2**

| **Exemple** | **1 (Témoin)** | **2 (+ Enzymes)** | **3 (+ Enzymes + Levure)** | **4 (+ Enzymes + BioRemove)** |
|---|---|---|---|---|
| **CO₂ ppm final** | 29 968 | 37 685 | 52 304 | 56 414 |
| **CO₂ ppm initial** | 849 | 626 | 1 170 | 474 |
| **Temps de culture (jours)** | 2,90 | 2,92 | 2,94 | 2,95 |
| **ppm CO₂ produit** | 29 119 | 37 059 | 51 134 | 55 940 |
| **ppm CO₂/jour** | 10 024 | 12 690 | 17410 | 18 939 |
| **Rapport /Témoin** | 1,0 | 1,3 | 1,7 | 1,9 |

Le simple apport d'enzymes cellulolytiques (exemple 2) provoque un accroissement de la formation de CO₂ de 30%. L'action de l'enzyme est amplifiée par l'apport de mycète. En présence de mycète, l'accroissement de CO₂ est de l'ordre de 70 à 90 % dans les conditions expérimentales utilisées.

### Exemples 5 et 6:

On a utilisé le même dispositif (même colonnes et calcin pollué) que pour les exemples précédents, sauf que de l'air était injecté en continu en fond de colonne et extrait en tête. A différents moments, l'injection d'air est interrompue afin de déterminer la teneur en CO₂ de la phase gazeuse contenue dans la colonne. Du gaz est prélevé en continu en tête de colonne, introduit dans un analyseur de CO₂, puis recyclé dans la colonne. La mesure de la teneur en CO₂ s'effectue en enregistrant la valeur de la concentration en CO₂ en fonction du temps sur une durée d'environ 10 minutes. Ces essais sont destinés à simuler une convection forcée d'air au travers de calcin pollué et traité par une préparation selon l'invention.

Le contenu d'une colonne, pour l'exemple 5, était identique à celui de l'exemple 3 (enzymes + levure S. Cerevisiae). Le contenu de l'autre colonne, pour l'exemple 6, était identique à celui de l'exemple 5 sauf qu'il ne contenait pas d'enzyme. Le calcin et la préparation ont été bien mélangés pour répartir aussi uniformément que possible la préparation à la surface du calcin, avant de l'introduire dans la colonne. On a mesuré 51 ppm de CO₂ pour l'exemple 6 sans enzyme, et 255 ppm de CO₂ pour l'exemple 5 avec enzymes.

### Exemples 7 à 12:

Les fines de calcins sont constituées de particules de verre éliminées au cours des traitements d'épuration des calcins. Elles sont particulièrement contaminées par des matières organiques, principalement des fibres papetières dont la teneur peut atteindre de l'ordre de 5 à 10 % de la masse sèche ou parfois plus. On a simulé à l'aide d'une gélose préalablement stérilisée (destruction de la flore endogène) un milieu de culture en phase solide. Selon les essais, des enzymes (mêmes enzymes que pour l'exemple 2) ou du glucose (10 g/l) était présent au départ. Des essais ont été réalisés à pH naturel et après ajustement à pH 5 par ajout d'une solution d'acide sulfurique. Les milieux ont été coulés en boîtes de Pétri, certains ayant été ensemencés avec une préparation respectivement de BioRemove 5600, ou de levure Saccharomyces Cerevisiae. Les boîtes ont été examinées après incubation. Des essais « témoin » ne contenaient ni enzyme ni microorganisme. Les conditions d'essais et les résultats sont rassemblés dans le tableau 3 :

**Tableau 3**

| **Ex** | **pH** | **Glucose g/l** | **Enzymes** | **Témoin** | **S. cerevisiae** | **BioRemove** |
|---|---|---|---|---|---|---|
| 7 | naturel | - | - | - | - | + |
| 8 | naturel | - | E | - | + | + |
| 9 | naturel | 10 | - | - | + | + |
| 10 | 5 | - | - | - | - | + |
| 11 | 5 | - | E | - | + | + |
| 12 | 5 | 10 | - | - | + | + |

Ces essais, essentiellement qualitatifs, réalisés sur des milieux au départ stérilisés montrent que la levure S. Cerevisiae se développe dès lors que le milieu contient une enzyme ou du glucose. On estime que l'enzyme produit en fait du glucose. La moisissure BioRemove se développe même en l'absence d'enzyme et de glucose.

### Exemples 13 à 16 :

Ces exemples concernent la dégradation de la matière organique facilement biodégradable, sans cellulose, par des micro-organismes.

On a utilisé un mélange de billes de verre de 10 mm et 2 mm réparti dans des pots contenant environ 61 g de billes dont environ 45,5 g de billes de 10 mm et 15,5 g billes de 2 mm. La matière organique (MO : simulant des résidus d'aliments, sucres, lipides, protéines, alcool) introduite dans chacun des pots, est apportée par une dispersion aqueuse à 300 g/L de matière organique ayant la composition suivante pour 200 mL : 36 g de saccharose; 4,8 g de peptone de viande; 14,4 g d'huile ISIO 4; 4,8 g d'alcool.

Cette solution a été répartie en 4 fractions. Chacune des 4 fractions a été ensemencée à 10⁸ ufc/L avec un inoculum de micro-organisme ou de préparations de micro-organismes comme suit : quatre inoculas de micro-organismes ou de préparations de micro-organismes ont été préparés à partir de souches de laboratoire de : Saccharomyces Cerevisiae et de Bacillus Subtilis, et à partir de préparations commerciales de micro-organismes : BioRemove 5600 et Toler-X 5100 (Novozymes).

Les cultures de S. Cerevisiae et B. Subtilis ont été incubées 48 h à 30 °C, respectivement sur gélose Sabouraud et sur gélose nutritive. Ces cultures sont reprises en suspension dans 5 ml d'eau stérile. Les dénombrements des microorganismes de ces suspensions sont réalisés en cellule de Thoma après dilution au 1/100.

Pour BioRemove 5600 et Toler-X 5100, 1g de chacune de ces préparations est mis en suspension dans 9 ml d'eau stérile. Un dénombrement en cellule de Thoma est réalisé sur ces suspensions.

Des dilutions de ces quatre suspensions sont ensuite effectuées en fonction des dénombrements, afin d'inoculer la solution organique à raison de 10⁵ ufc/mL de solution organique.

Pour chaque micro-organisme, on constitue une série de 24 pots de façon à avoir 3 répétitions pour chaque temps d'incubation.

Après préparation des solutions organiques contenant chacune 10⁸ ufc/L, on introduit 2,1 mL de cette solution dans chaque pot soit environ 0,034 mL de solution par g de verre, ou 10 mg de matière organique par g de verre. La valeur de 0,034 mL de solution/g de verre a été déterminée préalablement comme valeur limite de rétention d'eau du calcin avant ruissellement. Cela correspond à 3,3% en poids de préparation par rapport à la somme calcin pollué + préparation.

Les deux séries de pots inoculés avec S.Cerevisiae et B.Subtilis sont incubées dans des pots fermés. Celles inoculées avec BioRemove et Toler-X le sont dans des pots ouverts. Les incubations sont réalisées de 0 à 5 jours à 30 °C. Trois pots de chacune des séries sont prélevés à t = 0h, 6 heures, 12 heures, 24 heures, 48 heures, 72 heures, 96 heures, 120 heures, pour mesurer les masses sèches de chaque pot après séchage 24 heures à 100 °C, et suivre ainsi l'évolution de la teneur en matière sèche des différents pots (moyenne de 3 pots) en fonction du temps pour chaque inoculum. Les résultats sont présentés sur la figure 3. On voit que la déperdition en masse est beaucoup plus rapide dans le cas des mycètes S.Cerevisiae et BioRemove que dans le cas des bactéries B.Subtilis et Toler-X.

## Revendications

1. Procédé de traitement d'emballages pollués par une matière organique biodégradable contenant de la cellulose et contenant une flore endogène, comprenant :
- un tri sélectif d'emballages pollués aboutissant à des lots de déchets contaminés qui ne contiennent chacun qu'un seul type d'emballage pollué en plastique ou en verre, suivi
- d'un traitement desdits emballages en plastique ou en verre pollués par une préparation comprenant au moins une enzyme cellobiohydrolase et/ou une enzyme β 1-4 glucanase et en outre optionnellement une enzyme β 1-4 glucosidase, ladite préparation étant ajoutée auxdits emballages pollués en plastique ou en verre, ladite au moins une enzyme dégradant la cellulose en une masse de matière organique biodégradable, laquelle est ensuite dégradée par la flore endogène, de manière à obtenir des emballages en plastique ou en verre dont la teneur en matière organique biodégradable a été réduite.

2. Procédé selon la revendication 1, **caractérisé en ce que** la préparation comprend les trois enzymes suivantes
∘ une cellobiohydrolase,
∘ une β 1-4 glucanase,
∘ une β 1-4 glucosidase.

3. Procédé selon l'une des revendications précédentes, **caractérisé en ce que** la préparation comprend au moins une enzyme d'hydrolyse d'hémicellulose choisie parmi Xylanases, Glucuronoxylanases, Glucomannanases, Galactoglucomannanases, Arabinoglucuronoxylanases, Galactanases et Xylan Acetyl estérases.

4. Procédé selon l'une des revendications précédentes, **caractérisé en ce que** la préparation comprend au moins une enzyme en quantité telle que 15 mL de la préparation en présence de 50 mg de papier Whatman n°1, produit de 1 à 55,5 et de préférence de 3,5 à 40 mg de glucose par jour à la température de 45°C.

5. Procédé selon l'une des revendications précédentes, **caractérisé en ce que** la préparation comprend au moins un mycète ou actinomycète.

6. Procédé selon la revendication précédente, **caractérisé en ce que** la préparation comprend au moins un mycète du type moisissure, notamment choisie dans la liste suivante : un Aspergillus, un Fusarium, un Neurospora, un Trichoderma, un Pénicillium.

7. Procédé selon l'une des deux revendications précédentes, **caractérisé en ce que** la préparation comprend au moins un mycète du type levure, notamment choisie dans la liste suivante : Saccharomyces Cerevisiae, Candida, Yarrowia, Kluyveromyces, Pichia, Géotrichum.

8. Procédé selon l'une des trois revendications précédentes, **caractérisé en ce que** la préparation comprend 2.10⁷ à 2.10¹¹ ufc/L de mycète ou actinomycète.

9. Procédé selon l'une des revendications précédentes, **caractérisé en ce que** la préparation a un pH inférieur à 8 et de préférence inférieur à 7 et de préférence compris entre 4 et 6,5.

10. Procédé selon l'une des revendications précédentes, **caractérisé en ce qu'**au début du traitement, les emballages pollués, notamment de calcin pollué, comprennent au moins 0,05% en poids de matière organique biodégradable, exprimé en matière sèche.

11. Procédé selon l'une des revendications précédentes, **caractérisé en ce que** la matière organique biodégradable contient au moins 30% en poids de cellulose sur la base de la matière sèche.

12. Procédé selon l'une des revendications précédentes, **caractérisé en ce qu'**après le traitement, les emballages traités, notamment de calcin traité, comprennent au plus 0,05 % en poids de matière organique biodégradable, exprimé en matière sèche.

13. Procédé selon l'une des revendications précédentes, **caractérisé en ce que** la préparation comprend une levure et **en ce que** le traitement n'est accompagné d'aucune convection forcée d'air au travers des emballages pollués.

14. Procédé selon l'une des revendications précédentes, **caractérisé en ce que** les emballages pollués, notamment de calcin pollué, comprennent plus de 0,05% en poids de cellulose exprimé en matière sèche.

15. Procédé selon l'une des revendications précédentes, **caractérisé en ce qu'**on laisse agir la préparation sur les emballages pollués pendant au moins 1 jour et généralement pendant une durée allant de 1 jour à un an, généralement de 2 jours à 6 mois.

16. Procédé selon l'une des revendications précédentes, **caractérisé en ce que** les emballages pollués sont du calcin pollué.

17. Procédé selon la revendication précédente, **caractérisé en ce que** le calcin pollué contient au moins 90% en poids de verre.

18. Procédé selon l'une des revendications précédentes, **caractérisé en ce que** la préparation est ajoutée aux emballages pollués de sorte qu'elle ne ruisselle pas hors des emballages.

19. Procédé selon l'une des revendications précédentes, **caractérisé en ce que** la préparation est ajoutée aux emballages pollués à raison de 0,5 à 7% et généralement de 0,5% à 5% en poids de la somme de la masse des emballages pollués et de la préparation.

20. Procédé selon l'une des revendications précédentes, **caractérisé en ce que** la préparation comprend un agent moussant et/ou mouillant.

21. Procédé selon l'une des revendications précédentes, **caractérisé en ce qu'**après traitement, les emballages traités sont soumis à un rinçage par de l'eau d'appoint, l'eau de ruissellement en résultant étant réutilisée au moins partiellement pour constituer la préparation de traitement des emballages pollués.

## Patentansprüche

1. Verfahren zur Behandlung verschmutzter Verpackungen durch ein biologisch abbaubares organisches Material, das Cellulose enthält und eine endogene Flora enthält, umfassend:
- eine Abfalltrennung verschmutzter Verpackungen, wodurch Lose kontaminierter Abfälle zustande kommen, die jeweils nur eine einzige Art einer verschmutzten Verpackung aus Kunststoff oder Glas enthalten, gefolgt
- von einer Behandlung der verschmutzten Verpackungen aus Kunststoff oder aus Glas durch eine Zubereitung, die mindestens ein Cellobiohydrolase-Enzym und/oder ein β 1-4 Glucanase-Enzym und darüber hinaus optional ein β 1-4 Glucosidase-Enzym umfasst, wobei die Zubereitung den verschmutzten Verpackungen aus Kunststoff oder aus Glas beigegeben wird, wobei das mindestens ein Enzym die Cellulose in eine Masse aus biologisch abbaubarem organischem Material abbaut, welche danach durch die endogene Flora derart abgebaut wird, um Verpackungen aus Kunststoff oder aus Glas zu erhalten, deren Gehalt an biologisch abbaubarem organischem Material reduziert worden ist.

2. Verfahren nach Anspruch 1, **dadurch gekennzeichnet, dass** die Zubereitung die folgenden drei Enzyme umfasst
° eine Cellobiohydrolase,
° eine β 1-4 Glucanase
° eine β 1-4 Glucosidase

3. Verfahren nach einem der vorstehenden Ansprüche, **dadurch gekennzeichnet, dass** die Zubereitung mindestens ein Hemicellulose-Hydrolyse-Enzym, ausgewählt aus Xylanasen, Glucuronoxylanasen, Glucomannanasen, Galactoglucomannanasen, Arabino-Glucuronoxylanasen, Galactanasen und Acetyl-Xylan-Esterasen umfasst.

4. Verfahren nach einem der vorstehenden Ansprüche, **dadurch gekennzeichnet, dass** die Zubereitung mindestens ein Enzym in einer solchen Menge umfasst, dass 15 ml der Zubereitung in Gegenwart von 50 mg an Whatman Papier Nr. 1, von 1 bis 55,5 und vorzugsweise von 3,5 bis 40 mg an Glucose pro Tag bei einer Temperatur von 45 °C herstellt.

5. Verfahren nach einem der vorstehenden Ansprüche, **dadurch gekennzeichnet, dass** die Zubereitung mindestens ein Mycet oder Aktinomycet umfasst.

6. Verfahren nach dem vorstehenden Anspruch, **dadurch gekennzeichnet, dass** die Zubereitung mindestens ein Mycet in der Art eines Schimmelpilzes, insbesondere aus der folgenden Liste ausgewählt umfasst: Aspergillus, Fusarium, Neurospora, Trichoderma, Penicillinum.

7. Verfahren nach einem der beiden vorstehenden Ansprüche, **dadurch gekennzeichnet, dass** die Zubereitung mindestens ein Mycet in der Art einer Hefe, insbesondere aus der folgenden Liste ausgewählt umfasst: Saccharomyces Cerevisiae, Candida, Yarrowia, Kluyveromyces, Pichia, Geotrichum.

8. Verfahren nach einem der drei vorstehenden Ansprüche, **dadurch gekennzeichnet, dass** die Zubereitung 2.10⁷ bis 2.10¹¹ KbE/l an Mycet oder Aktinomycet umfasst.

9. Verfahren nach einem der vorstehenden Ansprüche, **dadurch gekennzeichnet, dass** die Zubereitung einen pH-Wert von weniger als 8 und vorzugsweise weniger als 7 und vorzugsweise zwischen 4 und 6,5 liegend aufweist.

10. Verfahren nach einem der vorstehenden Ansprüche, **dadurch gekennzeichnet, dass** die verschmutzten Verpackungen, insbesondere verschmutztes Bruchglas, zu Beginn der Behandlung mindestens 0,05 Gew.-% an biologisch abbaubarem organischem Material, als Trockenmasse ausgedrückt, umfassen.

11. Verfahren nach einem der vorstehenden Ansprüche, **dadurch gekennzeichnet, dass** das biologisch abbaubare organische Material mindestens 30 Gew.-% an Cellulose auf Basis der Trockenmasse enthält.

12. Verfahren nach einem der vorstehenden Ansprüche, **dadurch gekennzeichnet, dass** die behandelten Verpackungen, insbesondere das behandelte Bruchglas, nach der Behandlung höchstens 0,05 Gew.-% an biologisch abbaubarem organischem Material, als Trockenmasse ausgedrückt, umfassen.

13. Verfahren nach einem der vorstehenden Ansprüche, **dadurch gekennzeichnet, dass** die Zubereitung eine Hefe umfasst, und dadurch, dass die Behandlung von keiner erzwungenen Luftkonvektion durch die verschmutzten Verpackungen hindurch begleitet ist.

14. Verfahren nach einem der vorstehenden Ansprüche, **dadurch gekennzeichnet, dass** die verschmutzten Verpackungen, insbesondere verschmutztes Bruchglas, mehr als 0,05 Gew.-% an Cellulose, als Trockenmasse ausgedrückt, umfassen.

15. Verfahren nach einem der vorstehenden Ansprüche, **dadurch gekennzeichnet, dass** man die Zubereitung auf den verschmutzten Verpackungen mindestens 1 Tag lang, und im Allgemeinen für eine Dauer einwirken lässt, die von 1 Tag bis zu einem Jahr, im Allgemeinen von 2 Tagen bis 6 Monaten reichen kann.

16. Verfahren nach einem der vorstehenden Ansprüche, **dadurch gekennzeichnet, dass** die verschmutzten Verpackungen verschmutztes Bruchglas sind.

17. Verfahren nach dem vorstehenden Anspruch, **dadurch gekennzeichnet, dass** das verschmutzte Bruchglas mindestens 90 Gew.-% an Glas enthält.

18. Verfahren nach einem der vorstehenden Ansprüche, **dadurch gekennzeichnet, dass** die Zubereitung den verschmutzten Verpackungen derart beigegeben wird, dass sie nicht aus den Verpackungen herausrieselt.

19. Verfahren nach einem der vorstehenden Ansprüche, **dadurch gekennzeichnet, dass** die Zubereitung den verschmutzten Verpackungen im Umfang von 0,5 bis 7 Gew.-% und im Allgemeinen von 0,5 Gew.-% bis 5 Gew.-% der Summe der Masse der verschmutzten Verpackungen und der Zubereitung beigegeben wird.

20. Verfahren nach einem der vorstehenden Ansprüche, **dadurch gekennzeichnet, dass** die Zubereitung ein Schaum- und/oder Netzmittel umfasst.

21. Verfahren nach einem der vorstehenden Ansprüche, **dadurch gekennzeichnet, dass** die behandelten Verpackungen nach der Behandlung einer Spülung mit Frischwasser unterzogen werden, wobei das daraus entstehende Rieselwasser mindestens teilweise wiederverwendet wird, um die Zubereitung zur Behandlung der verschmutzten Verpackungen darzustellen.

## Claims

1. A method for treating packaging polluted by a biodegradable organic matter containing cellulose and containing an endogenous flora, comprising:
- a selective sorting of polluted packaging resulting in contaminated waste batches each containing only one type of polluted plastic or glass packaging, followed by
- a treatment of said polluted plastic or glass packaging with a formulation comprising at least one cellobiohydrolase enzyme and/or β 1-4 glucanase enzyme and further optionally β 1-4 glucosidase enzyme, said formulation being added to said polluted plastic or glass packaging, said at least one enzyme degrading cellulose into a mass of biodegradable organic matter, which is then degraded by the endogenous flora, so as to obtain plastic or glass packaging whose biodegradable organic matter content has been reduced.

2. The method according to claim 1, **characterized in that** the formulation comprises the following three enzymes
∘ cellobiohydrolase,
∘ β 1-4 glucanase,
∘ β 1-4 glucosidase.

3. The method according to any of the preceding claims, **characterized in that** the formulation comprises at least one hemicellulose hydrolysis enzyme selected from Xylanases, Glucuronoxylanases, Glucomannanases, Galactoglucomannanases, Arabinoglucuronoxylanases, Galactanases and Acetyl Xylan esterases.

4. The method according to any of the preceding claims, **characterized in that** the formulation comprises at least one enzyme in an amount such as 15 mL of the formulation in the presence of 50 mg of Whatman paper No. 1, produces 1 to 55.5 and preferably 3.5 to 40 mg of glucose per day at a temperature of 45°C.

5. The method according to any of the preceding claims, **characterized in that** the formulation comprises at least one fungus or actinomycete.

6. The method according to the preceding claim, **characterized in that** the formulation comprises at least one fungus of the mould type, in particular selected from the following list: Aspergillus, Fusarium, Neurospora, Trichoderma, Penicillium.

7. The method according to any of the two preceding claims, **characterized in that** the formulation comprises at least one fungus of the yeast type, in particular selected from the following list: Saccharomyces Cerevisiae, Candida, Yarrowia, Kluyveromyces, Pichia, Geotrichum.

8. The method according to any of the three preceding claims, **characterized in that** the formulation comprises 2.10⁷ to 2.10¹¹ cfu/L of fungus or actinomycete.

9. The method according to any of the preceding claims, **characterized in that** the formulation has a pH of less than 8 and preferably less than 7 and preferably comprised between 4 and 6.5.

10. The method according to any of the preceding claims, **characterized in that** at the start of the treatment, the polluted packaging, in particular polluted cullet, comprise at least 0.05% by weight of biodegradable organic matter, expressed as dry matter.

11. The method according to any of the preceding claims, **characterized in that** the biodegradable organic matter contains at least 30% by weight of cellulose based on dry matter.

12. The method according to any of the preceding claims, **characterized in that** after the treatment, the treated packaging, in particular treated cullet, comprise at most 0.05% by weight of biodegradable organic matter, expressed as dry matter.

13. The method according to any of the preceding claims, **characterized in that** the formulation comprises a yeast and **in that** the treatment is not accompanied by any forced convection of air through the polluted packaging.

14. The method according to any of the preceding claims, **characterized in that** the polluted packaging, in particular polluted cullet, comprise more than 0.05% by weight of cellulose expressed as dry matter.

15. The method according to any of the preceding claims, **characterized in that** the formulation is left to act on the polluted packaging for at least 1 day and generally for a period of time ranging from 1 day to a year, generally from 2 days to 6 months.

16. The method according to any of the preceding claims, **characterized in that** the polluted packaging are polluted cullet.

17. The method according to the preceding claim, **characterized in that** the polluted cullet contains at least 90% by weight of glass.

18. The method according to any of the preceding claims, **characterized in that** the formulation is added to the polluted packaging so that it does not run off outside the packaging.

19. The method according to any of the preceding claims, **characterized in that** the formulation is added to the polluted packaging in an amount of 0.5 to 7% and generally 0.5% to 5% by weight of the sum of the mass of the polluted packaging and the formulation.

20. The method according to any of the preceding claims, **characterized in that** the formulation comprises a foaming and/or wetting agent.

21. The method according to any of the preceding claims, **characterized in that** after treatment, the treated packaging are subjected to rinsing with make-up water, the resulting runoff water being at least partially reused to constitute the polluted packaging treatment formulation.
